# EUROPEAN PATENT SPECIFICATION

(11) **EP 4 594 251 B1**
(45) Date of publication and mention of the grant of the patent: **23.09.2026**
(21) Application number: 24833682.8
(22) Date of filing: 19.12.2024
(51) Int. Cl.: C01B 25/22, C01B 25/32, C05G 5/00, C05B 1/02, C05B 1/04, C05D 9/02

(54) **PROCESS FOR PURIFYING A PHOSPHORUS-CONTAINING SOURCE**
VERFAHREN ZUR REINIGUNG EINER PHOSPHORHALTIGEN QUELLE
PROCÉDÉ DE PURIFICATION D'UNE SOURCE CONTENANT DU PHOSPHORE

(30) Priority: 21.12.2023 BE 202306043
(43) Date of publication of application: 06.08.2025
(73) Proprietor: Prayon, 4480 Engis (BE)
(72) Inventor: DE BOIS, Kevin, 4480 Engis (BE); DETHIER, Thomas, 4480 Engis (BE)
(74) Representative: Gevers Patents
(86) International application number: PCT/EP2024/087585
(87) International publication number: WO 2025/132912

(56) References cited:
- WO-A1-2017/151016
- CN-A- 1 978 314
- YU YAO-HUI ET AL: "Leaching of phosphorus from phosphate tailings and extraction of calcium phosphates: Toward comprehensive utilization of tailing resources", JOURNAL OF ENVIRONMENTAL MANAGEMENT, ELSEVIER, AMSTERDAM, NL, vol. 347, 2 October 2023 (2023-10-02), XP087430252, ISSN: 0301-4797, [retrieved on 20231002], DOI: 10.1016/J.JENVMAN.2023.119159

## Description

### FIELD OF THE INVENTION

The present invention relates to a process for purifying a phosphorus-containing source.

Generally, phosphorus-containing source, such as phosphate rocks or black mass or ashes originating from the incineration of sludge or bones, are attacked with a mineral acid, such as H₂SO₄, to recover phosphorus. More precisely, such processes typically involve an attack of a phosphate rock with a digestion liquor resulting into the formation of a digested suspension comprising a liquid phase and a solid phase. Then, a separation step can be carried out in order to collect, on one hand, the filtrate which comprises phosphorus-containing compounds and impurities and, on the other hand, the solid phase comprising byproducts.

Phosphorus-containing material can contain metallic impurities, such as heavy metals, including cadmium (Cd). Phosphoric digestion process can result into a phosphoric acid with several metallic impurities in the final product. The presence of metallic impurities such as Cd in the final product prevents the resulted acid from being used in many applications such as fertilizers, food, feed and pharmaceuticals without any further treatment.

### BACKGROUND OF THE INVENTION

Current processes can focus on the elimination of metallic impurities from the generated phosphoric acid, coming from for instance a phosphate rock to produce phosphoric acid, and therefore in the end of the value chain which makes such processes less efficient, more complex and more expensive.

Some examples of costly & technically demanding downstream impurity removal processes to further treat phosphoric acid are: solvent extraction, nanofiltration, ion exchange resins, electrodialysis [Phosphoric Acid, Purification, Uses, Technology, and Economics, R. Gilmour, CRC Press 2014, chap 2, Purification of phosphoric acid, pages 71 - 76]. Most of the time, these techniques are applicable on a liquid phase which is previously processed (dearsenificated, desulfated, free of any solids, ...) after acid digestion from the rock. Most of the time, these technics should be combined and they generate different impurity flows, which should be eliminated. In addition to complexify the process, these techniques are expensive to put in place and bring some complex operations regarding safety and used chemicals.

In the specific case of cadmium - one of the most harmful heavy metals - the European authorities have imposed a reduction in cadmium content in phosphate fertilizers to 60 mg/kg since 2020. Unlike arsenic and other heavy metals, cadmium cannot be removed using sulphides (Ullmann Encyclopedia of industrial chemistry, Phosphoric acids and phosphates,2012, Wiley, vol 26, pages 688-690). Methods such as electrodialysis are now being explored to remove unwanted cadmium: "Elimination du cadmium de I'acide phosphorique par électrodialyse", Rev.Soc. Technol. Synthèse 24 : 84-90 (2012).

However, electrodialysis is an energy-intensive & slow process, which makes use of membranes, which are sensitive to fouling or scaling. This can reduce the efficiency of the process and it requires frequent maintenance and cleaning.

CN 109 133 017 discloses a method for removing heavy metals from phosphate rock through chemical method which uses an acidic agent (organic or inorganic) and a chelating agent. The chelating agent is used to remove the heavy metal and is preferably 1,10-phenanthroline. Chelating agents are generally organic compounds and their presence in the resulting solid phase should be avoided from a technical point of view (foam presence in the subsequent steps) and a purity point of view (specifications of the production acid). Methods for recovering phosphorous from phosphate rock is known from CN 1978314 A1, WO 2017/151016 A1 and YU YAO-HUI ET AL: Leaching of phosphorous from phosphate tailings and extraction of calcium phosphates: Toward comprehensive utilization of tailing resources". JOURNAL OF ENVIREMENTAL MANAGEMENT, ELSEVIER, AMSERDAM, NL, vol 347, 2 October 2023 (2023-10-02).

Such process is expensive because of the use of 1,10- phenanthroline as chelating agent. The salts formed through the reaction of certain impurities with 1,10- phenanthroline can be difficult in terms of waste management due to its potential toxicity for the environment. The use of 1,10-phenanthroline and other chelating agents may require complex processes and specialized equipments, which can increase the complexity of the operation. The use of chelating agents can potentially alter the properties of the extracted phosphates, which can impact the quality of the final product. Chelating agents remain organic compounds which should be avoided in view of the current ecological situation worldwide.

As can be noted, most of the known processes are downstream oriented - processing phosphoric acids - which involved complex methods since combinations of additional treatment steps should be applied in order to remove each impurity from the acid. Some other processes are dedicated to upstream impurity removal - directly from the starting material - but are still limited as explained hereinabove.

There is therefore a need to provide a simple, efficient and well-integrated process for purifying a phosphorus-containing material. Moreover, the process should be environmentally friendly, sustainable, economical and energy saving.

### SUMMARY OF THE INVENTION

The present invention relates to a (upstream impurity removal) process for purifying a phosphorus-containing source comprising removing metallic trace elements including Cd from the phosphorus-containing source, the process. *The process* comprises the following steps:
a) At a temperature lower than 100°C for a duration lower than 180 minutes, reacting at least one phosphorus-containing source which comprises metallic trace elements and at least 5 wt.% and at most 50 wt.% of phosphorus expressed as P₂O₅ equivalent with at least one mineral acid leading to a digested suspension comprising (major part of these) metallic trace elements in a liquid phase and a solid phase mainly comprising phosphorus-containing compounds, wherein the reaction is performed at a molar ratio H⁺/P₂O₅ comprised between 0.05 and 5, preferably between 0.05 and 4.5, more preferably between 0.05 and 4, even more preferably between 0.05 and 3.5, advantageously between 0.05 and 3. The pH is measured in the digested suspension before the next filtration step (b) described below, and the measured pH is adjusted by adding at least one basic compound (step f) in the digested suspension by an increase of said measured pH equal to a value comprised between 0.25 and 4 units.
b) Separating said liquid phase from said digested suspension.

The process of the present invention enables:
- Efficiently removing the metallic trace elements from the phosphorus-containing source,
- Avoiding or highly limiting the use of any types of organic chelating agents,
- Avoiding complex technics to remove the metallic trace elements from phosphoric acid,
- Maintaining a high content of P₂O₅ in the solid phase in the end of the process,
- Saving energy.

The separation step (b) enables separation between said liquid phase which comprises metallic trace elements and said solid phase which mainly comprises phosphorus-containing compounds.

In some preferred embodiments, said solid phase may comprise some metallic trace elements present in a lower amount, compared with the amount of phosphorus-containing compounds in said solid phase.

### DESCRIPTION OF THE FIGURES

**Figure 1** illustrates the various steps of the claimed process
**Figure 2** illustrates an example of solubility and precipitation curves for P₂O₅ and a metal impurity (Me) as a function of pH, depending on whether the pH is being decreased or increased.

### DETAILED DESCRIPTION OF THE INVENTION

As shown in Figure 1, the present invention concerns a process for purifying a phosphorus-containing source, prior to extracting the phosphate contained in the source. The phosphorus-containing source comprises at least 5 wt.% and at most 50 wt.% of phosphorus expressed as P₂O₅ equivalent and also contains metallic trace elements (Me) including cadmium (Cd). The present process aims to separate as much as possible the Me from the P₂O₅. The process comprises a leaching step (a) to dissolve the Me and yield a digested suspension comprising a Me-rich liquid phase and a P₂O₅-rich solid phase, followed by a separation step (b) to separate the Me-rich liquid phase from the P₂O₅-rich solid phase. The leaching step (a) is carried out at a temperature lower than 100°C for a duration lower than 180 minutes and comprises reacting the phosphorus-containing source with at least one mineral acid at a first pH (pH0) and at a molar ratio H⁺ / P₂O₅ comprised between 0.05 and 5.

Because a fraction of the P₂O₅ present in the source is also dissolved at the leaching conditions and is present in the liquid phase together with Me, this fraction of P₂O₅ would be lost absent further action. The present invention proposes a solution for recovering the fraction of P₂O₅ dissolved during the leaching step (a) at pH0, without increasing the amount of Me relative to P₂O₅, defined by a molar ratio, Me / P₂O₅. The gist of the present invention is, prior to the separation step (b), to add a base to the digested suspension to increase the pH from pH0 to a value pH1, which is greater than pH0 by 0.25 to 4 units (i.e., pH1 = pH0 + ΔpH, wherein ΔpH = 0.25 to 4 units). The increase in pH by ΔpH precipitates a substantial portion, preferably all the P₂O₅ dissolved during the leaching step (a).The value of ΔpH must be selected to maximise the fraction of dissolved P₂O₅ that will precipitate at pH1 and at the same time, to minimise the fraction of Me which precipitates at pH1.

After the addition of the base to increase the pH and precipitate the P₂O₅ in solution, the Me-liquid phase can be separated from the P₂O₅-rich solid phase of the digested suspension, recovering (substantially) all the P₂O₅ originally present in the phosphorus containing source.

Preferably, reaction step (a) of the process of the invention is carried out in such a way to avoid solubilisation of fluorine in the digested suspension. More preferably, the liquid phase of the digested suspension is substantially free of any fluorine or fluorine compound.

The present process is preferably substantially free of any added organic compound, in particular any added organic chelating agent.

Advantageously, the P₂O₅ yield (expressed in %) in the solid phase in the end of the process is higher than 60%, preferably higher than 65 %, more preferably higher than 70 %, even more preferably higher than 85 %, advantageously higher than 90 %, more advantageously more than 95 %. The P₂O₅ yield is a mass ratio and is calculated from the total phosphorus content (g) expressed in P₂O₅ equivalent in the solid phase mainly comprising phosphorus-containing compounds divided by the total phosphorus content (g) expressed in P₂O₅ equivalent in the at least one phosphorus-containing source.

In a preferred embodiment, the molar ratio H⁺/P₂O₅ of reaction step (a) is comprised between 0.05 and 5, preferably between 0.05 and 4.5, more preferably between 0.05 and 4, even more preferably between 0.05 and 3.5, advantageously between 0.05 and 3, more advantageously between 0.05 and 2.5.

In a preferred embodiment, the molar ratio H⁺/P₂O₅ of reaction step (a) is lower than 5, preferably lower than 4.5, more preferably lower than 4, even more preferably lower than 3.5, advantageously lower than 3, more advantageously lower than 2.5, even more advantageously lower than 1.

In a further preferred embodiment, the molar ratio H⁺/P₂O₅ of reaction step (a) is higher than 0.05, preferably higher than 0.1, more preferably higher than 0.5, even more preferably higher than 0.75.

In an embodiment of the present invention, the phosphorus-containing source contains calcium (Ca). The contents of Ca in the phosphorus-containing source is herein expressed in therm of CaO equivalent based on the total weight of the phosphorus-containing source), For example, the phosphorus-containing source can contain less than 10 wt.% CaO. Alternatively, the phosphorus-containing source can contain more than 10 wt.% CaO and even between 30 and 50 wt.%, such as more than 40 wt.% CaO. Preferably, when said phosphorus-containing source contains more than 10 wt.% of calcium, expressed in CaO equivalent (based on the total weight of the phosphorus-containing source), the molar ratio H⁺/Ca of reaction step (a) is higher than 0.05, preferably higher than 0.07, more preferably higher than 0.08, even more preferably higher than 0.1, advantageously higher than 0.15, more advantageously higher than 0.2, even more advantageously higher than 0.3, preferably higher than 0.5.

Advantageously, when said phosphorus-containing source contains more than 10 wt.% of calcium, expressed in CaO equivalent (based on the total weight of the phosphorus-containing source), the molar ratio H⁺/Ca of reaction step (a) is lower than 5.

More preferably, when said phosphorus-containing source contains more than 10 wt.% of calcium, expressed in CaO equivalent (based on the total weight of the phosphorus-containing source), the molar ratio H⁺/Ca of reaction step (a) is lower than 1, preferably lower than 0.99, more preferably lower than 0.97, even more preferably lower than 0.95, advantageously lower than 0.9, more advantageously lower than 0.85, even more advantageously lower than 0.8, even more advantageously lower than 0.7.

More advantageously, when said phosphorus-containing source contains more than 10 wt.% of calcium, expressed in CaO equivalent (based on the total weight of the phosphorus-containing source), the molar ratio H⁺/Ca of reaction step (a) is higher than 0.05.

Even more preferably, when said phosphorus-containing source contains more than 10 wt.% of calcium, expressed in CaO equivalent (based on the total weight of the phosphorus-containing source), the molar ratio H⁺/Ca of reaction step (a) is comprised between 0.05 and 1, preferably between 0.05 and 0.7, more preferably between 0.05 and 0.8, even more preferably between 0.1 and 0.8, advantageously between 0.1 and 0.65, more advantageously between 0.2 and 0.65.

Preferably, when said phosphorus-containing source contains more than 40 wt.% of calcium, expressed in CaO equivalent (based on the total weight of the phosphorus-containing source), the molar ratio H⁺/Ca of reaction step (a) is higher than 0.05, preferably higher than 0.07, more preferably higher than 0.08, even more preferably higher than 0.1, advantageously higher than 0.15, more advantageously higher than 0.2, even more advantageously higher than 0.3, preferably higher than 0.5.

More preferably, when said phosphorus-containing source contains more than 40 wt.% of calcium, expressed in CaO equivalent (based on the total weight of the phosphorus-containing source), the molar ratio H⁺/Ca of reaction step (a) is lower than 1, preferably lower than 0.99, more preferably lower than 0.97, even more preferably lower than 0.95, advantageously lower than 0.9, more advantageously lower than 0.85, even more advantageously lower than 0.8, even more advantageously lower than 0.7.

Even more preferably, when said phosphorus-containing source contains more than 40 wt.% of calcium, expressed in CaO equivalent (based on the total weight of the phosphorus-containing source), the molar ratio H⁺/Ca of reaction step (a) is comprised between 0.05 and 1, preferably between 0.05 and 0.7, more preferably between 0.05 and 0.8, even more preferably between 0.1 and 0.8, advantageously between 0.1 and 0.65, more advantageously between 0.2 and 0.65.

In some preferred embodiments, when the phosphorus-containing source comprises 10 wt.% or less of calcium, expressed in CaO equivalent (based on the total weight of the phosphorus-containing source), the molar ratio H⁺/P₂O₅ of reaction step (a) is higher than 0.05, preferably higher than 0.1, more preferably higher than 0.25, even more preferably higher than 0.5, advantageously higher than 0.75, more advantageously higher than 1 even more preferably higher than 1.25, advantageously higher than 1.3, more advantageously higher than 1.5, even more advantageously higher than 2.

Preferably, when the phosphorus-containing source comprises 10 wt.% or less of calcium, expressed in CaO equivalent (based on the total weight of the phosphorus-containing source), the molar ratio H⁺/P₂O₅ of reaction step (a) is lower or equal to 5, more preferably lower than 4.5, even more preferably lower than 4, preferably lower than 3.5, even more preferably lower than 3.

In some preferred embodiments, when the phosphorus-containing source comprises 10 wt.% or less of calcium, expressed in CaO equivalent (based on based on the total weight of the phosphorus-containing source, the molar ratio H⁺/P₂O₅ of reaction step (a) is comprised between 0.05 and 5, preferably between 0.05 and 4.5, more preferably between 0.05 and 4, even more preferably between 0.05 and 3.5, advantageously between 0.05 and 3, more advantageously between 0.05 and 2.5

Preferably, the reaction (step a) of the at least one phosphorus-containing source which comprises metallic trace elements and / or separation step (b) is continuous.

According to a preferred embodiment, said solid phase mainly comprising phosphorus-containing compounds is reacted (step d) with an acidic solution (preferably sulfuric acid) to produce at least one phosphoric acid. This reaction step d is carried out at a molar ratio H⁺/Ca between 1.8 and 2.2, wherein H⁺ ions come from the acidic solution comprising sulfuric acid and Ca atoms come from said solid phase mainly comprising phosphorus-containing compounds.

In a preferred embodiment, preferably under dihydrate conditions, this reaction step d is carried out at a molar ratio H⁺/Ca between 1.8 and 2.2, wherein H⁺ ions come from the acidic solution comprising sulfuric acid and Ca atoms come from said solid phase mainly comprising phosphorus-containing compounds.

Preferably, the reaction step (a) is made under agitation.

Step (a) and / or (b) of the process of the invention is preferably carried out continuously.

Preferably, the solid phase, collected after separation step (b), is washed with water (recycled or fresh water, under counter or co-current washing), before being stored or used, the entire wash filtrate quantity or a portion of the wash filtrate of the solid phase can be recirculated into the reaction step (a) as a component of the digested suspension or used as a diluting agent for mineral acid or used as a vehiculing agent for the phosphorus-containing source or any combinations or mixture thereof or a portion of the wash filtrate of the solid phase can be neutralised at step (c). The portion of the wash filtrate which is recirculated is preferably comprised between 0 and 100 wt.%, more preferably between 1 and 99 wt.%, more preferably between 5 and 90 wt.%, more preferably between 10 and 80 wt.%, most preferably between 15 and 50 wt. %.

Preferably, the liquid phase of the digested suspension is neutralised (step c) with a basic compound, after being separated (step b) to produce a purified filtrate (obtained after a further separation step). Preferably, the entire purifed filtrate quantity or a portion of the purified filtrate can be recirculated into the reaction step (a) as a component of the digested suspension or used as a vehiculing agent for the phosphorus-containing source or used as a diluting agent for mineral acid or any combinations or mixture thereof. The portion of the purified filtrate which is recirculated is preferably comprised between 0 and 100 wt.%, more preferably between 1 and 99 wt.%, more preferably between 5 and 90 wt.%, more preferably between 10 and 80 wt.%, most preferably between 15 and 50 wt. %.

According to a preferred embodiment, said at least one mineral acid is chosen from the group comprising sulfuric acid, phosphoric acid, chlorhydric acid, nitric acid, hydrofluoric acid, hexafluorosilicic acid and / or said at least one mineral acid is a recycled acidic residual aqueous solution obtained during phosphate production, such as an acidic residual solution (such as preferably Recycled Phosphoric Acid, "RPA" as defined hereinbelow), and / or during washing of an installation or during washing of gases of a plant and any above mentioned combinations thereof.

In some embodiments, the at least one mineral acid can be pure or residual, i.e. generated by washing installations or during routine production or maintenance operations in industries such as metallurgy, food processing, pharmaceuticals, chemicals, and particularly sulphuric acid production or phosphoric acid production. For instance, the acid may be issued from etching of metals or metals surface treatment or after use of polyphosphoric acid solution as drying agent.

In some preferred embodiments, the at least one mineral acid can also be a residual aqueous solution containing phosphate and / or sulfate ions.

Advantageously, said at least one phosphorus-containing source comprises a total amount of phosphorus expressed as P₂O₅ equivalent preferably comprised between 10 and 50 wt.% P₂O₅, preferably between 12 and 45 wt.% P₂O₅, more preferably between 14 and 40 wt.% P₂O₅, more preferably between 15 and 38 wt.% P₂O₅, more preferably between 18 and 35 wt.% P₂O₅, more preferably between 19 and 33 wt.% P₂O₅, more preferably between 22 and 30 wt.% P₂O₅.

In some preferred embodiments, the pressure applied during the reaction step (a) can be an atmospheric pressure or with a light depression, of about 0.02 ± 0.01 bar.

According to a particularly preferred embodiment, the reaction step (a) is performed within one or more vessel wherein the at least one mineral acid is added at the same time as the phosphorus-containing source or before the latter or after it.

According to a particularly preferred embodiment, the reaction step (a) is performed within a vessel divided in different subsequent compartments (preferably in fluid communication by overflow) wherein the at least one mineral acid is added in the same compartment as the phosphorus-containing source or before in the previous compartment or after in the next compartment.

Preferably, said at least one mineral acid has a concentration comprised between 3 wt.% and 99 wt.%, preferably between 4 and 95 wt.%, preferably between 5 and 90 wt.%, more preferably between 6 and 85 wt.%; more preferably between 7 and 50 wt.%; most preferably between 8 and 25 wt.% or is equal to 7 wt.% ± 2 wt.%.

According to a particularly advantageous embodiment, H₂SO₄ has a concentration comprised between 40 wt.% and 99 wt.%, preferably between 45 and 98.5 wt.%, more preferably between 50 and 98 wt.%.

According to a particular embodiment, H₃PO₄ has a concentration comprised between 5 and 80 wt.%, preferably between 10 and 65 wt.%, preferably between 15 and 60 wt.%, preferably between 20 and 57 wt.%, preferably between 25 and 45 wt.% expressed as H₃PO₄ equivalent.

According to a preferred embodiment, HCl has a concentration comprised between 1 wt.% and 40 wt.%, preferably between 5 and 37 wt.%, more preferably between 10 and 30 wt.%.

Advantageoulsy, HNO₃ has a concentration comprised between 10 wt.% and 70 wt.%, preferably between 15 and 60 wt.%, more preferably between 15 and 50 wt.%.

More advantageously, HF has a concentration comprised between 10 wt.% and 70 wt.%, preferably between 15 and 60 wt.%, more preferably between 15 and 50 wt.%.

According to an advantageous embodiment, H₂SiF₆ has a concentration comprised between 5 wt.% and 35 wt.%, preferably between 7 and 30 wt.%, more preferably between 10 and 25 wt.%.

According to a particular embodiment, the reaction step (a) is performed within one or more vessel wherein the at least one mineral acid is diluted before the addition of the at least one mineral acid to the one or more vessel and/or during the addition and or after the addition.

According to a particularly preferred embodiment, the reaction step (a) is performed within a vessel divided in different subsequent compartments (preferably in fluid communication by overflow) wherein the at least one mineral acid is preferably diluted directly in one or more compartments.

Preferably, said at least one mineral acid is diluted with water and /or acidic residual solution and/or diluted mineral acid and/or recycled mineral acid and/or purified filtrate and/or the wash filtrate and/or the RPA and/or the liquid phase.

Preferably , said at least one mineral acid is diluted till the concentration reaches preferably at least 1 wt.%, preferably at least 2 wt.%, preferably at least 3 wt.%, preferably at least 5 wt.%, preferably at least 6 wt.%, and/or preferably at most 15 wt.%, preferably at most 12 wt.%, preferably at most 11wt.%, preferably at most 10wt.%; preferably at most 9 wt.% of the total solution.

Preferably, said at least one mineral acid, being sulfuric acid, is diluted till the concentration reaches preferably at least 1 wt.%, preferably at least 2 wt.%, more preferably at least 3 wt.%, even more preferably at least 5 wt.%, preferably at least 6 wt.% and/or preferably at most 15 wt.%, more preferably at most 12 wt.%, even moe preferably at most 11 wt.%, preferably at most 10 wt.%, more preferably at most 9 wt.%.

More preferably, said digested suspension or phosphorus-containing source has a solid concentration higher than 10 wt.%, preferably higher than 15 wt.%, preferably higher than 20 wt.%, preferably higher than 25 wt.%, more preferably higher than 27 wt.%, even more preferably higher than 30 wt.%.

According to specific embodiment, said phosphorus-containing source is provided in the form of a slurry (in an aqueous solution or in water). In this case, the solid concentration is higher than 30 wt.%, preferably higher than 40 wt.%, more preferably higher than 50 wt.%, even more preferably higher than 60 wt.%. The aqueous solution may be provided through the recirculation of the wash filtrate (entire or portion) and / or the purified filtrate (entire or portion) and/or the liquid phase (at least a portion) separated in step (b) and/or the acidic residual solution (such as RPA). The recirculated portion of the wash filtrate is preferably comprised between 0 and 100 wt.%, more preferably between 1 and 99 wt.%, more preferably between 5 and 90 wt.%, more preferably between 10 and 80 wt.%, most preferably between 15 and 50 wt. %. The recirculated portion of the liquid phase is preferably comprised between 0 and 100 wt.%, more preferably between 1 and 99 wt.%, more preferably between 5 and 90 wt.%, more preferably between 10 and 80 wt.%, most preferably between 15 and 50 wt. %. The recirculated portion of the purified filtrate is preferably comprised between 0 and 100 wt.%, more preferably between 1 and 99 wt.%, more preferably between 5 and 90 wt.%, more preferably between 10 and 80 wt.%, most preferably between 15 and 50 wt. %. The recirculated portion of the acidic residual solution is preferably comprised between 0 and 100 wt.%, more preferably between 1 and 99 wt.%, more preferably between 5 and 90 wt.%, more preferably between 10 and 80 wt.%, most preferably between 15 and 50 wt. %.

Preferably, phosphorus-containing source can be an ore or rock containing in particular calcium phosphate in the form of apatite (and derivatives thereof including fluoro, chloro, hydroxy,...- apatite) or tri-calcium phosphate or dicalcium phosphate or whitlockite. It can be a phosphate salt such as ammonium phosphate salts, sodium phosphate salts, aluminium phosphate salts, iron phosphate salts, aluminium and iron phosphates salts, struvite or a mixture of salts and the like. Alternatively, the phosphorus-containing source can be a beneficiation residue including one or more of phosphate tailing and phosphate slimes. Beneficiation is a mining process step carried out after ore extraction from the ground. It preferably consists of mechanically separating minerals present in the phosphate ore (or "matrix") from each other. For example, phosphates can be mechanically separated from clay, and quartz (or sand). This can be achieved, e.g., by separation of the minerals as a function of their grain size or density.

Advantageously, said phosphorus-containing source is selected from the group containing:
∘ Phosphate ores, eventually in the form of a slurry (in water, in an aqueous solution or in a solvent),
∘ beneficiation residues, including one or more of phosphate tailing and phosphate slimes, eventually in the form of a slurry,
∘ phosphate salts choosen in the group of calcium phosphate, aluminium phosphate, iron phosphate, alkali phosphate, doubles salts or iron and aluminium or their mixtures, eventually in the form of a slurry,
∘ ashes, preferably ashes from one or more of incinerated organic material such as sewage sludge, bones, manure,
∘ black mass, and any combinations thereof.

Preferably, phosphorus-containing source contains metallic traces elements such as heavy metals, metalloids and radionuclides.

More preferably, phosphorus-containing source contains metallic traces elements such as As, Cd, Hg, Mo, Pb, Zn, Sr, Sb, Cr, Co, Cu, Sn, Mn, Ni, Se, Te, Tl, V, U, Ra, Th and combinations thereof. Even more preferably, phosphorus-containing source contains metallic trace elements such as As, Cd, Hg, Pb, Zn, Sr, Cr, Cu, Ni, U, Ra, Th and combinations thereof.

Advantageously, phosphorus-containing source (preferably phosphate ore) contains between 0.11 and 1.70 ppm As per wt.% P₂O₅, preferably between 0.5 and 1 ppm As per wt.% P₂O₅, preferably between 0.6 and 0.8 ppm As per wt.% P₂O₅.

Preferably, phosphorus-containing source (preferably phosphate ore) contains less than 1.5 ppm, preferably between 0.05 and 1.5 ppm Cd per wt.% P₂O₅, preferably between 0.4 and 1 ppm Cd per wt.% P₂O₅, preferably between 0.5 and 0.9 ppm Cd per wt.% P₂O₅.

Preferably, phosphorus-containing source (preferably phosphate ore) contains less than 0.8 ppm, preferably less than 0.5 ppm Cd per wt.% P₂O₅.

More preferably, phosphorus-containing source (preferably phosphate ore) contains less than 550 ppm, advantageously less than 200 ppm, preferably between 18 and 550 ppm Sr per wt.% P₂O₅, preferably between 30 and 400 ppm Sr per wt.% P₂O₅, preferably between 35 and 200 ppm Sr per wt.% P₂O₅.

Even more preferably, phosphorus-containing source (preferably phosphate ore)contains less than 30 ppm, preferably between 1 and 30 ppm Ti per wt.% P₂O₅, preferably between 2 and 10 ppm Ti per wt.% P₂O₅.

In some preferred embodiments, phosphorus-containing source (preferably phosphate ore) contains preferably between 0.1 and 0.9 ppm Th per wt. % P₂O₅, preferably between 0.2 and 0.5 ppm Th per wt.% P₂O₅.

Advantageously, phosphorus-containing source (preferably phosphate ore) contains preferably between 0.6 and 8 ppm Zn per wt. % P₂O₅.

More advantageously, phosphorus-containing source (preferably phosphate ore) contains less than 9, preferably between 1 and 10 ppm U₃O₈ per wt. % P₂O₅.

More advantageously, phosphorus-containing source (preferably phosphate ore) contains less than 15, preferably between 0.5 and 14, preferably between 4 and 10 ppm V per wt. % P₂O₅.

More advantageously, phosphorus-containing source (preferably phosphate ore) contains less than 3, preferably between 0.5 and 2 ppm Cu per wt. % P₂O₅.

More advantageously, phosphorus-containing source (preferably phosphate ore) contains less than 9, preferably between 0.5 and 8.5 ppm Zn per wt. % P₂O₅.

Preferably, the reaction step (a) occurs at a temperature lower than 90°C, preferably lower than 80°C, more preferably between 25°C and 75°C, more preferably between 30°C and 72°C, even more preferably between 60°C and 71°C, advantageously equal to or around 65 °C.

Avantageously, tt has been observed that working in the above ranges of temperature for performing the reaction enables retrieving metallic trace elements from the phosphorus-containing source with efficiency. This is particularly the case when the temperature is preferably between 60 and 75 °C.

Preferably, the reaction step (a) has a duration lower than 90 min, preferably lower than 60 min, more preferably lower than 50 min, even more preferably lower than 45 min, advantageously lower than 40 min, and preferably at least 5 minutes, more preferably at least 10 minutes.

Advantageously, the reaction step (a) has a duration of at least 5 minutes, preferably at least 10 minutes, more preferably at least 15 minutes.

Preferably, when the phosphorus-containing source comprises 10 wt.% or less of calcium, expressed in CaO equivalent (based on the total weight of the phosphorus-containing source), said at least one mineral acid is reacted with said phosphorus-containing source "in-excess"molar ratio (H⁺/P₂O₅). The "in-excess molar" ratio (H⁺/P₂O₅) (i.e. excess of acid) does not only serve to react with calcium present in the phosphorus-containing source but it is also useful to lixiviate other impurities such as silicium oxides and / or iron phosphate, and / or aluminium phosphate. The embodiment "in-excess" molar ratio can also be advantageous in cases wherein the phosphate source contains other forms of phosphates, other than calcium phosphates.

Preferably, when the phosphorus-containing source comprises more than 10 wt.% of calcium, expressed in CaO equivalent (based on based on the total weight of the phosphorus-containing source), said at least one mineral acid is reacted with said phosphorus-containing source at a sub-stoichiometric molar ratio (H⁺/Ca).

Preferably, when the phosphorus-containing source comprises more than 35 wt.% of calcium, expressed in CaO equivalent (based on based on the total weight of the phosphorus-containing source), said at least one mineral acid is reacted with said phosphorus-containing source at a sub-stoichiometric molar ratio (H⁺/Ca).

Preferably, when the phosphorus-containing source is 13hosen in the group of Phosphate ores in the form of a slurry, beneficiation residues including one or more of phosphate tailing and phosphate slimes and their mixtures , said at least one mineral acid is reacted with said phosphorus-containing source at a sub-stoichiometric molar ratio (H⁺/Ca).

According to a particular embodiment of the invention, reaction step (a) is performed until reaching a pH comprised between 1.0 and 6.0, more preferably between 1.5 and 5.5, even more preferably between 1.7 and 5.0, even more preferably between 2.0 and 4.5.

According to a particular embodiment of the invention, reaction step (a) is performed until pH (measured before step b and/or in the digested suspension) is higher than 3.0 and / or lower than 6.0.The selection of a particular range of pH enables controlling the reaction with enhancement with respect to the targeted impurities. This embodiment enables retrieving lots of impurities, such as heavy metals including Cd.

The selection of a particular range of pH enables controlling the reaction with enhancement with respect to the targeted impurities. This embodiment enables retrieving lots of impurities, such as metalloids.

The selection of a particular range of pH enables controlling the reaction with enhancement with respect to the targeted impurities. This embodiment enables retrieving lots of impurities, such as radionucleides.

The selection of a particular range of pH enables controlling the reaction with enhancement with respect to the targeted impurities. This embodiment enables retrieving lots of impurities, in particular Cd, Sr, Ra, Cr, Pb, U₃O₈ , Cu, Zn, V and/or As.

According to the present invention, the pH is measured in the digested suspension before filtration step (b), in the conditions of reaction at for instance 75°C. The measured pH is adjusted by adding at least one basic compound (step f) in the digested suspension, to increase said measured pH by a value of about 0.25 or 0.5 or 0.75 or 1 or 1.5 or 2 or 2.5 or 3.0 or 3.5 or 4 unit(s). Preferably the basic compound is added until completion of the reaction.

For instance, the initial pH (when measure is taken) is between < 1 and 6, preferably between 1.5 and 6.0, more preferably between 2 and 4. With the addition of the basic compound, the pH can reach a value between 3 and 6, preferably between 3.5 and 5.0, preferably between 4.0 and 4.5 with the recovery of P₂O₅ in the solid phase

This increase of the pH leads to the formation of phosphate salt in the digested suspension with re-precipitation of phosphorus. This is an advantage of the present invention. Without wishing to be bound by any theory, it is believed that this effect can be explained as follows. As shown in Figure 2 of the present application, the solubility curves of P₂O₅ and metal (Me)-impurities such as e.g., Cd, are not symmetrical when lowering the pH (i.e, dissolving components during leaching step (a)) and when increasing the pH (i.e., precipitating components during the addition of a base).

The left-hand side of Figure 2 plots the solubility curves of P₂O₅ and a metal impurity, Me, as the pH is being decreased during the leaching step (a). The right-hand side of Figure 2 plots the precipitation rate of P₂O₅ and Me, as the pH is increasing upon addition of a base. The pH abscissa is continuous through the left-hand side to the right-hand side of Figure 2. Separation of Me impurities by selective leaching relies on a clearly different solubility curve of Me in the leaching conditions compared with the one of P₂O₅. It follows that separation by selective leaching in cases where the solubility curves for P₂O₅ and Me are quite similar (see left-hand side of Figure 2), it is difficult to dissolve substantially all Me and little to no P₂O₅. This can be the case, e.g., with Me = Cd. In Figure 2, the fraction of the Me initially present in the source which is dissolved in given leaching conditions is indicated as (1-Me_0) and the fraction of P₂O₅ initially present in the source which is dissolved is indicated as (1 - P₂O₅ _0), wherein Me_0 and P₂O₅_0 are the fractions of Me and P₂O₅ remaining in the solid phase after leaching. It can be seen in Figure 2 that a substantial fraction of Me was dissolved (cf. high value of (1 - Me_0) in Figure 2) but a relevant fraction of P₂O₅ was also dissolved together with Me during the leaching (cf. (1 - P₂O₅_0) >> 0 in Figure 2).

To increase the P₂O₅-yield, while maintaining a high value of Me in solution, the present invention proposes to add a base to increase the pH by a value, ΔpH = 0.25 to 4 units. As can be seen on the right-hand side of Figure 2, raising the pH by ΔpH from a value pH0 to a value pH1, precipitates a major part of or even all of the P₂O₅ in solution, thus increasing the yield by the value (1 - P₂O₅_0), reaching a P₂O₅-yield of P₂O₅_1 according to the example illustrated in Figure 2, wherein P₂O₅_1 defines the P₂O₅ precipitation fraction at pH1. At the same time, raising the pH by ΔpH precipitated only a small fraction, ΔMe, of Me dissolved during the leaching

The foregoing effect is quantified in continuation with reference to Examples 4 and 5 described in continuation,Preferably, said basic compound is chosen in the group comprising NH₃, alkaline compounds and their corresponding oxides or hydroxides, alkaline-earth compounds and their corresponding oxides or hydroxides, quick lime, slaked lime, pulverized lime, lime milk, calcium hydroxide, lithium hydroxide, (finely ground) limestone, sodium oxide, aluminium hydroxide, aluminium oxide, sodium hydroxide, potassium hydroxide carbonate based compound sucha as calcium carbonate, basic phosphate salt (KH₂PO₄, potassium phosphate (mono-, di-), ammonium phosphate (mono- di-), calcium phosphate (mono- di- tri-), calcium sulphate), NaOH, ammonium based compounds, Ca₃(PO₄)₂ derivatives, mixtures and combinations thereof.

The basic compound is preferably in liquid form (slurry or a suspension or a solution of a basic compound, preferably calcium-containing compound) or in solid form.

More preferably, said basic compound is a calcium source chosen in the group comprising quick lime, slaked lime, pulverized lime, lime milk, calcium hydroxide, calcium carbonate and their combinations.

According to a preferred embodiment, the pH is adjusted in step (a) and / or (c) and/ or (f).

Advantageoulsy a basic compound is added in step step I and/ or (f).

In a preferred embodiment, a basic compound is added in step I in the context of neutralisation in order to be able to provide purified filtrate (after applying a separation step, i.e. filtration step).

In a more preferred embodiment, a basic compound is added in step (f) in the context of phosphorus precipitation in the digested suspension, preferably before step (b).

In an even more preferred embodiment, a basic compound is added in step (f) and step I.

Preferably, the reaction step (a) is performed in a first vessel and the addition of the basic compound (for precipitation of phosphorus) is performed in a second vessel before filtration step (b).

According to a particularly preferred embodiment, the reaction step (a) is performed within a vessel divided in different subsequent compartments (preferably in fluid communication by overflow) . In this case, the addition of the basic compound (for phosphorus precipitation) is performed in one or more subsequent compartments before filtration step (b).

More preferably, said metallic trace elements are selected from heavy metals, metalloids and radionuclides.

According to a particular embodiment of the invention, beside Cd, said metallic trace elements are chosen from As, Hg, Mo, Pb, Zn, Sr, Sb, Cr, Co, Cu, Sn, Mn, Ni, Se, Te, Tl, V, U, Ra, Th and Zn and combinations thereof.

According to an advantageous embodiment, said digested suspension comprises metallic trace elements selected from As, Cd, Hg, Mo, Pb, Zn, Sr, Sb, Cr, Co, Cu, Sn, Mn, Ni, Se, Te, TI, V, U, Ra, Th and Zn and combinations thereof.

Advantageously, beide Cd, said digested suspension mainly comprises, as metallic trace elements, As, Sr, Cr, Co, Cu, Zn, V, Ra,As, U₃O₈ and combinations thereof.

More advantageously, said phosphorus-containing source comprises metallic trace elements in a content of less than 1000 ppm, preferably less than 500 ppm, more preferably less than 250 ppm, more preferably less than 100 ppm, more preferably less than 50 ppm.

According to a preferred embodiment, said solid phase mainly comprising phosphorus-containing compounds contains said metallic trace elements in a ratio (metallic trace elements in ppm / % in P₂O₅) which is lower than the one of the phosphorus-containing source.

Preferably, solid phase mainly comprising phosphorus-containing compounds contains less metallic traces elements including Cd, such as As, Hg, Mo, Pb, Zn, Sr, Sb, Cr, Co, Cu, Sn, Mn, Ni, Se, Te, Tl, V, U, Ra, Th and combinations thereof than at least phosphorus-containing source.

Even more preferably, solid phase mainly comprising phosphorus-containing compounds contains preferably less than 1.5 ppm Cd per % wt. P₂O₅, preferably less than 0.8 ppm Cd per % wt. P₂O₅, preferably less than 0.5 Cd per % wt. P₂O₅.

Even more preferably, solid phase mainly comprising phosphorus-containing compounds contains preferably less than 550 ppm Sr per % wt. P₂O₅, preferably less than 200 ppm Sr per % wt. P₂O₅.

Even more preferably, solid phase mainly comprising phosphorus-containing compounds contains preferably less than 30 ppm Ti per % wt. P₂O₅.

Even more preferably, solid phase mainly comprising phosphorus-containing compounds contains preferably less than 9 ppm U₃O₈ per % wt. P₂O₅.

Even more preferably, solid phase mainly comprising phosphorus-containing compounds contains preferably less than 11 ppm V per % wt. P₂O₅.

Even more preferably, solid phase mainly comprising phosphorus-containing compounds contains preferably less than 4 ppm Zn per % wt. P₂O₅, preferably less than 3 ppm Zn per % wt. P₂O₅, preferably less than 2 ppm Zn per % wt. P₂O₅.

Even more preferably, solid phase mainly comprising phosphorus-containing compounds contains preferably less than 1.5 ppm Cu per % wt. P₂O₅, preferably less than 1 ppm Cu per % wt. P₂O₅.

According to an advantageous embodiment, the reaction step (a) is performed in such a way that the amount of metallic trace elements in the solid phase mainly comprising phosphorus-containing compounds is reduced by at least 10 %, preferably by at least 20 %, more preferably by at least 50 %, even more preferably by at least 60 %, advantageously by at least 70 % compared with the initial amount of Cd in the phosphorus-containing source.

Even more preferably, the Cd content in the solid phase mainly comprising phosphorus-containing compounds is reduced by at least 10% in comparison with the Cd content in the phosphorus-containing source, preferably reduced by at least 15%, more preferably reduced by at least 20%, even more preferably reduced by at least 25%, preferably reduced by at least 30%.

Even more preferably, the Sr content in the solid phase mainly comprising phosphorus-containing compounds is reduced by at least 2% in comparison with the Sr content in the phosphorus-containing source, preferably reduced by at least 5%.

Even more preferably, the As content in the solid phase mainly comprising phosphorus-containing compounds is reduced by at least 10% in comparison with the As content in the phosphorus-containing source, preferably reduced by at least 15%, more preferably reduced by at least 20%, even more preferably reduced by at least 25%, preferably reduced by at least 30%.

Advantageously, the U₃O₈ content in the solid phase mainly comprising phosphorus-containing compounds is reduced by at least 5% in comparison with the U₃O₈ content in the phosphorus-containing source, preferably reduced by at least 15%, more preferably reduced by at least 20%, even more preferably reduced by at least 25%.

Advantageously, the V content in the solid phase mainly comprising phosphorus-containing compounds is reduced by at least 5% in comparison with the V content in the phosphorus-containing source, preferably reduced by at least 10%, more preferably reduced by at least 15%.

Advantageously, the Cu content in the solid phase mainly comprising phosphorus-containing compounds is reduced by at least 10% in comparison with the V content in the phosphorus-containing source, preferably reduced by at least 20%, more preferably reduced by at least 30%, preferably reduced by at least 40%.

Advantageously, the Zn content in the solid phase mainly comprising phosphorus-containing compounds is reduced by at least 5% in comparison with the V content in the phosphorus-containing source, preferably reduced by at least 10%, more preferably reduced by at least 15%.

Preferably, said liquid phase is separated (step b) from the solid phase by a filtration under vacuum or under pressure. Preferably the filtration is done under vacuum. The separation is done with separation apparatus known in the art : band filter, tilting pan filter, centrifugal filter, ...

According to a preferred embodiment, the solid phase mainly comprising phosphorus-containing compounds is stored or used as it is, except if mentioned otherwise.

According to a preferred embodiment, the solid phase mainly comprising phosphorus-containing compounds is dried.

In a preferred embodiment, the process contains a recycling step of the liquid phase and /or the wash filtrate in the reaction step (a). The portion of the liquid phase which is recirculated is preferably comprised between 0 and 100 wt.%, more preferably between 1 and 99 wt.%, more preferably between 5 and 90 wt.%, more preferably between 10 and 80 wt.%, most preferably between 15 and 50 wt. %. The portion of the wash filtrate which is recirculated is preferably comprised between 0 and 100 wt.%, more preferably between 1 and 99 wt.%, more preferably between 5 and 90 wt.%, more preferably between 10 and 80 wt.%, most preferably between 15 and 50 wt.%.

Preferably, said solid phase mainly comprising phosphorus-containing compounds is further washed during and /or after filtration, preferably with water or with slightly acidic water resulting in a wash filtrate.

Preferably, said solid phase mainly comprising phosphorus-containing compounds is further treated by reacting it with an acidic solution selected from the group comprising HNO₃, H₃PO₄, H₂SO₄ and combinations thereof (step d)).

More preferably, the resulting product (following the reaction (step d) between said solid phase mainly comprising phosphorus-containing compounds and a compound selected from the group comprising HNO₃, H₃PO₄, H₂SO₄ and combinations thereof) is then separated, preferably filtrated, to produce phosphoric acid and a solid residue which may be calcium sulfate. This stage is located downstream of the process of the present invention.

According to a preferred embodiment, said solid phase mainly comprising phosphorus-containing compounds is reacted (step d) with an acidic solution comprising sulfuric acid to produce phosphoric acid and calcium sulfate which can be separated and optionally washed at a later stage (step e). The reaction step d is done under hemihydrate (HH), dihydrate (DH), anhydrous conditions or a mix of HH-DH or DH-HH (as known by the person skilled in the art). The molar ratio H⁺/Ca of this reaction should be between 1.8 and 2.2, wherein H⁺ ions come from the acidic solution, preferably comprising sulfuric acid, and Ca atoms come from said solid phase mainly comprising phosphorus-containing compounds. In a preferred embodiment, dihydrate conditions can be used to realise step d.

DH conditions or dihydrate conditions are known from the person skilled in the art. HH conditions are for instance disclosed in document CA 915 883 which is incorporated by reference into the present disclosure regarding the conditions to be applied in the context of "HH conditions". DH-HH conditions are for instance disclosed in document EP 2 507 168 and WO 2012 163 425, which are incorporated by reference into the present disclosure regarding the conditions to be applied in the context of "DH-HH conditions".

Preferably, the calcium sulfate is washed (step e) and a Recycled Phosphoric Acid solution (RPA) is obtained. This RPA solution may be used as mineral acid and/or as diluted mineral acid and/or as a diluent for mineral acid and/or recycled in reaction step (a) and/or recycled in step (d) and/or sent into the produced phosphoric acid or as as a vehiculing agent for the phosphorus-containing source. The portion of the RPA which is recirculated is preferably comprised between 1 and 100 wt.%, more preferably between 5 and 90 wt.%, more preferably between 10 and 80 wt.%, most preferably between 15 and 50 wt. %. In a particularly preferred embodiment, RPA solution is completely recycled in step (d).

Preferably, RPA solution issued from the washing of the calcium sulfate is completely recycled in the reaction step (d).

According to a preferred embodiment, at a temperature lower than 90°C for a duration lower than 90 minutes, reacting at least one phosphate ore or beneficiation residues which comprises metallic trace elements such as Cd between 0.03 and 1.63 ppm per %.wt P₂O₅ and at least 15 wt.% and at most 40 wt.% of phosphorus expressed as P₂O₅ equivalent with at least one mineral acid leading to a digested suspension comprising said metallic trace elements in the liquid phase, and a solid phase mainly comprising phosphorus-containing compounds, wherein the molar ratio H⁺/P₂O₅ is comprised between 0.05 and 5. The digested suspension is filtrated. The liquid phase is neutralized (step c) and filtrated so that the produced purified filtrate can be reused in reaction step (a). The portion of the purified filtrate which is recirculated in reaction step (a) is preferably comprised between 1 and 100 wt.%, more preferably between 5 and 90 wt.%, more preferably between 10 and 80 wt.%, most preferably between 15 and 50 wt. %. Said solid phase mainly comprising phosphorus-containing compounds is reacted with H₂SO₄ (step d) to produce phosphoric acid and calcium sulfate which are separated. This step d can preferably be done under dihydrate conditions, the molar ratio H⁺/Ca of step d should be between 1.8 and 2.2. The calcium sulfate is washed after separation and the collected RPA solution is reused in step d. The portion of the RPA solution which is recirculated in step d is preferably comprised between 1 and 100 wt.%, more preferably between 5 and 90 wt.%, more preferably between 10 and 80 wt.%, most preferably between 15 and 50 wt. %.

According to a preferred embodiment, at a temperature lower than 90°C for a duration lower than 90 minutes, reacting at least one phosphate ore or beneficiation residues which comprises metallic trace elements such as Cd between 0.03 and 1.63 ppm per %.wt P₂O₅ and at least 15 wt.% and at most 40 wt.% of phosphorus expressed as P₂O₅ equivalent with at least one mineral acid leading to a digested suspension comprising said metallic trace elements in the liquid phase, and a solid phase mainly comprising phosphorus-containing compounds. The reaction step a is performed at a molar ratio H⁺/Ca comprised between 0.05 and 1. The digested suspension is filtrated. The liquid phase is neutralized (step c) and filtrated so that the produced purified filtrate can be reused in reaction step (a). The portion of the purified filtrate which is recirculated in reaction step (a) is preferably comprised between 1 and 100 wt.%, more preferably between 5 and 90 wt.%, more preferably between 10 and 80 wt.%, most preferably between 15 and 50 wt. %. Said solid phase mainly comprising phosphorus-containing compounds is reacted with H₂SO₄ (step d) to produce phosphoric acid and calcium sulfate which are separated. This step d is preferably done under dihydrate conditions, the molar ratio H⁺/Ca of step d should be between 1.8 and 2.2. The calcium sulfate is washed after separation and the collected RPA solution is reused in step d. The portion of the RPA solution which is recirculated in step d is preferably comprised between 1 and 100 wt.%, more preferably between 5 and 90 wt.%, more preferably between 10 and 80 wt.%, most preferably between 15 and 50 wt. %.

According to an additional preferred embodiment of the present invention, at a temperature lower than 90°C for a duration lower than 90 minutes, reacting at least one phosphate ore or beneficiation residues which comprises metallic trace elements such as Cd between 0.03 and 1.63 ppm per %.wt P₂O₅ and at least 15 wt.% and at most 40 wt.% of phosphorus expressed as P₂O₅ equivalent with at least one mineral acid leading to a digested suspension comprising said metallic trace elements in the liquid phase, and a solid phase mainly comprising phosphorus-containing compounds. The reaction step a is performed at a molar ratio H⁺/P₂O₅ comprised between 0.05 and 5. A basic compound preferably chosen in the group comprising quick lime, slaked lime, pulverized lime, lime milk, calcium hydroxide, calcium carbonate and their combinations is added (step f) to the digested suspension so that the pH reaches up to 5,5. The digested suspension is filtrated. The liquid phase is neutralized (step c) and filtrated so that the produced purified filtrate can be reused in step a). The portion of the purified filtrate which is recirculated in step a) is preferably comprised between 1 and 100 wt.%, more preferably between 5 and 90 wt.%, more preferably between 10 and 80 wt.%, most preferably between 15 and 50 wt. %. Said solid phase mainly comprising phosphorus-containing compounds is reacted with H₂SO₄ (step d) to produce phosphoric acid and calcium sulfate which are separated. This step d is done under dihydrate conditions, the molar ratio H⁺/Ca of step d should be between 1.8 and 2.2. The calcium sulfate is washed after separation and the collected RPA is reused in step d). The portion of the RPA solution which is recirculated in step d) is preferably comprised between 1 and 100 wt.%, more preferably between 5 and 90 wt.%, more preferably between 10 and 80 wt.%, most preferably between 15 and 50 wt. %.

According to an additional preferred embodiment of the present invention, at a temperature lower than 90°C for a duration lower than 90 minutes, reacting at least one phosphate ore or beneficiation residues which comprises metallic trace elements such as Cd between 0.03 and 1.63 ppm per %.wt P₂O₅ and at least 15 wt.% and at most 40 wt.% of phosphorus expressed as P₂O₅ equivalent with at least one mineral acid leading to a digested suspension comprising said metallic trace elements in the liquid phase, and a solid phase mainly comprising phosphorus-containing compounds. The reaction step a is performed at a molar ratio H⁺/Ca comprised between 0.05 and 1. A basic compound preferably chosen in the group comprising quick lime, slaked lime, pulverized lime, lime milk, calcium hydroxide, calcium carbonate and their combinations is added (step f) to the digested suspension so that the pH reaches up to 5,5. The digested suspension is filtrated. The liquid phase is neutralized (step c) and filtrated so that the produced purified filtrate can be reused in step a). The portion of the purified filtrate which is recirculated in step a) is preferably comprised between 1 and 100 wt.%, more preferably between 5 and 90 wt.%, more preferably between 10 and 80 wt.%, most preferably between 15 and 50 wt. %. Said solid phase mainly comprising phosphorus-containing compounds is reacted with H₂SO₄ (step d) to produce phosphoric acid and calcium sulfate which are separated. This step d is done under dihydrate conditions, the molar ratio H⁺/Ca of step d should be between 1.8 and 2.2. The calcium sulfate is washed after separation and the collected RPA is reused in step d). The portion of the RPA solution which is recirculated in step d) is preferably comprised between 1 and 100 wt.%, more preferably between 5 and 90 wt.%, more preferably between 10 and 80 wt.%, most preferably between 15 and 50 wt. %.

According to a further preferred embodiment, at a temperature lower than 90°C for a duration lower than 90 minutes, reacting at least one phosphate ore or beneficiation residues which comprises metallic trace elements such as Cd between 0.03 and 1.63 ppm per %.wt P₂O₅ and at least 15 wt.% and at most 40 wt.% of phosphorus expressed as P₂O₅ equivalent with a portion of RPA solution leading to a digested suspension comprising said metallic trace elements in the liquid phase, and a solid phase mainly comprising phosphorus-containing compounds. The reaction step a is performed at a molar ratio H⁺/P₂O₅ comprised between 0.05 and 5,wherein H⁺ is coming from mineral acid and P₂O₅ is the phosphorus content of the at least one phosphorus-containing source. A basic compound preferably 21 hosen in the group of quick lime, slaked lime, pulverized lime, lime milk, calcium hydroxide, calcium carbonate and their combinations is added to the digested suspension so that the pH reaches up to 5,5. The digested suspension is filtrated. The liquid phase is neutralized (step c) and filtrated so that the purified filtrate is reused in step a). The portion of the purified filtrate which is recirculated in step a) is preferably comprised between 1 and 100 wt.%, more preferably between 5 and 90 wt.%, more preferably between 10 and 80 wt.%, most preferably between 15 and 50 wt. %.Said solid phase mainly comprising phosphorus-containing compounds is reacted with H₂SO₄ solution to produce phosphoric acid and calcium sulfate (step d) which are separated. This step d of said solid phase mainly comprising phosphorus-containing compounds with sulfuric acid is done in dihydrate conditions, the molar ratio of this step d) H⁺/Ca should be between 1.8 and 2.2. The calcium sulfate is washed after separation and the collected RPA solution is reused in step a). The portion of the RPA solution which is recirculated in step a) is preferably comprised between 1 and 100 wt.%. The portion of the RPA solution which is recirculated in step d) is preferably comprised between 1 and 100 wt.%.

According to a preferred embodiment, said solid phase mainly comprising phosphorus-containing compounds is reacted with HNO₃ ,H₃PO₄, H₂SO₄ and combinations thereof to produce superphosphates : simple, double or triple.

According to a particular embodiment, said solid phase mainly comprising phosphorus-containing compounds is further processed to produce:
- A fertilizer, preferably of the type of monoammonium or diammonium phosphates (MAP or DAP), NPK fertilizer (Ammonium-Potassium Phosphate fertilizer), NPS fertilizer (Ammonium-sulfate Phosphate fertilizer) MCP monocalcium phosphate, DCP dicalcium phosphate, SSP (single super phosphate), TSP (triple superphosphate) and / or
- Animal food, and / or
- Merchant grade or purified phosphoric acid, and / or
- Purified Phosphate salts.

The object of the invention also concerns a use of the process of the present invention in the production of:
- A fertilizer, preferably of the type of monoammonium or diammonium phosphates (MAP or DAP), NPK fertilizer (Ammonium-Potassium Phosphate fertilizer), NPS fertilizer (Ammonium-sulfate Phosphate fertilizer) MCP monocalcium phosphate, DCP dicalcium phosphate SSP (single super phosphate), TSP (triple superphosphate) and / or
- Animal food, and / or
- Merchant grade or purified phosphoric acid, and / or
   Purified Phosphate salts.

The invention is further exemplified in the following description of the invention.

All above embodiments can be combined together even if not explicitly mentioned.

The present process of the invention is preferably substantially free of any added organic compound, in particular any added organic chelating agent or ligand.

The term "substantially free of any added organic compound, in particular any added organic chelating agent or ligand" refers to a step wherein a particular constituent, here "organic compound" for example is added in an amount that has no material effect on the overall process of the invention - preferably impurity removal. In some embodiments, "substantially free" may refer to organic compound, preferably chelating agent or ligand being present in an amount lower than 1 wt. %, preferably lower than 0.5 wt. %, more preferably lower than 0.2 wt. %, even more preferably lower than 0.1 wt.%, advantageously lower than 0.01 wt. %, with respect to the total weight of the digested suspension or that no amount of that particular constituent is present in the digested suspension.

In preferred embodiments, the chelating agent can derive from aromatic hydrocarbon phenanthrene.

The reaction step (a) of the process of the invention can be carried out in such a way to avoid solubilisation of fluorine in the liquid phease of the digested suspension. More preferably, the liquid phase of the digested suspension is substantially free of any fluorine or fluorine compound.

The term "substantially free of any fluorine or fluorine compound" means that reaction step (a) is performed in such a way to avoid solubilisation of at most 3 % of fluorine content into the liquid phase of the digested suspension, preferably at most 2 %, more preferably at most 1 %, even more preferably at most 0.1 %, advantageously at most 0.01 %, with respect to the total amount of the flurorine contained in the phosphorus-containing source.

The word "basic compound" used in the context of the present invention means any recited basic compound referred in the context of phosphorus precipitation and / or neutralisation. In other words, the list of basic compounds referred in the present application can be used in both case by the skilled person in the art.

The wording 'RPA' refers to a Recycled Phosporic Acid produced during step e of the process of the invention, meaning the produced phosphoric acid (PA) and the solid residue (e.g. calcium sulfate) which are separated from each other and when that solid residue is washed with water (W) to provide RPA solution. Moreover, RPA can also be any phosphoric acid produced during the process of the invention.

When an amount is expressed in relation to "U₃O₈" compound, the value corresponds to the total amount of U expressed as U₃O₈ in the unit used in the corresponding teaching.

The wording "upstream impurity removal process" means that the process of the invention focuses on the treatment of the phosphorus-containing source, without necessarily further treat the produced acid, which makes the process of the invention particularly efficient and differentiated with known ones.

In the context of the present invention, the expression "molar ratio H⁺/P₂O₅" of reaction step (a) means the number of moles of H⁺ coming from said at least one mineral acid divided by the number of moles of P₂O₅ equivalent representing the total phosphorus content in the at least one phosphorus-containing source.

In the context of the invention,the expression "molar ratio H⁺/Ca" in the context of the reaction step (a) means the number of moles of H⁺ coming from said at least one mineral acid divided by the number of moles of Ca in the at least one phosphorus-containing source.

In the context of the invention,the expression "molar ratio H⁺/Ca" in the context of the reaction step (d) means the number of moles of H⁺ coming from said at least one acidic solution divided by the number of moles of Ca in the solid phase mainly comprising phosphorus-containing compounds.

The articles "a" and "an" are used herein to refer to one or to more than one (i.e., to at least one) of the grammatical objects of the article. By way of example, "a phosphorus-containing source" means one or more phosphorus-containing source.

The phrases "in one embodiment", "according to one embodiment" and the like generally mean the particular feature, structure, or characteristic following the phrase is included in at least one embodiment of the present disclosure, and may be included in more than one embodiment of the present disclosure. Importantly, such phrases do not necessarily refer to the same embodiment.

If the specification states a component or feature "may", "can", "could", or "might" be included or have a characteristic, that particular component or feature is not required to be included or have the characteristic.

If appearing herein, the term "comprising" and derivatives thereof are not intended to exclude the presence of any additional component, step, or procedure, whether or not the same is disclosed herein. In order to avoid any doubt, the term "comprising" may include any additional additive, adjuvant, or compound, unless stated to the contrary. In contrast, the term, "consisting essentially of" if appearing herein, excludes from the scope of any succeeding recitation any other component, step or procedure, except those that are not essential to operability and the term "consisting of", if used, excludes any component, step or procedure not specifically delineated or listed. The terms "or" and "and/or", unless stated otherwise, refer to the listed members individually as well as in any combination. For example, the expression A and/or B refers to A alone, B alone, or to both A and B. Moreover the term and equivalent to "comprising" can be replaced by "consisting of".

Figure 1 illustrates a particular embodiment of the pocess of the invention. As can be seen:
**At reference 1 on figure 1, step** a **of the invention is illustrated:** at a temperature lower than 100°C for a duration lower than 180 minutes, at least one phosphorus-containing source P, which comprises metallic trace element and at least 5 wt.% and at most 50 wt.% of phosphorus expressed as P₂O₅ equivalent, is reacted with at least one mineral acid MA leading to a digested suspension which comprises a liquid phase mainly comprising said metallic trace element and a solid phase mainly comprising phosphorus-containing compounds, wherein the reaction is performed at a molar ratio H⁺/P₂O₅ comprised between 0.05 and 5.
**At reference 2 on figure 1, step (f) of the invention is disclosed:** the pH is measured in the digested suspension, in the conditions of reaction at for instance 75°C, and, the measured pH is adjusted by adding at least one basic compound (B) in the digested suspension, resulting into an increase of said measured pH equal to a value of about 0.25 or 0.5 or 0.75 or 1 or 1.5 or 2 or 2.5 unit(s). This step enables precipitating phosphorus which is beneficial for the yield of P₂O₅.
**At reference 3 illustrated on figure 1, step (b) of the invention is applied:** Separating the liquid phase from said solid phase which mainly comprises phosphorus-containing compounds. The liquid phase can be neutralised (step c of the invention) by the addition of a basic compound (B') in order to produce a purified filtrate (after filtration referred in 6). The produced purified filtrate (ref. L in 6) can be recirculated throughout the process, in particular in step (a), preferably as diluting agent for mineral acid, or as referred in the present invention.

The entire purifed filtrate quantity or a portion of the purified filtrate can be recirculated into the reaction step (a) as a component of the digested suspension or used as a vehiculing agent for the phosphorus-containing source or used as a diluting agent for mineral acid or any combinations or mixture thereof. The portion of the purified filtrate which is recirculated is preferably comprised between 1 and 100 wt.%, more preferably between 5 and 90 wt.%, more preferably between 10 and 80 wt.%, most preferably between 15 and 50 wt. %.

The solid phase (S, in ref.3) can be washed or not in order to produce a wash filtrate (W) which can be recirculated within the process (back in step (a), or as disclosed in the present invention). Preferably, the solid phase (S, in ref.3) is washed with water (under counter or co-current washing), before being stored or used, the entire wash filtrate quantity or a portion of the wash filtrate of the solid phase can be recirculated into the reaction step (a) or as a component of the digested suspension or as a vehiculing agent for the phosphorus-containing source or any combinations or mixture thereof. The portion of the wash filtrate which is recirculated is preferably comprised between 1 and 100 wt.%, more preferably between 5 and 90 wt.%, more preferably between 10 and 80 wt.%, most preferably between 15 and 50 wt. %.

**At reference 4 illustrated on figure 1, step d of the invention is carried out,** wherein solid phase mainly comprising phosphorus-containing compounds is attacked by an acidic solution selected from the group comprising HNO₃, H₃PO₄, H₂SO₄ and combinations thereof (Ac) resulting into the production of phosphoric acid and a solid residue (e.g. calcium sulfate).

**At reference 5 illustrated on figure 1, step e of the invention is carried out, wherein** phosphoric acid (PA) and a solid residue (e.g. calcium sulfate) may be separated and the solid residue may be washed with water (W) to provide RPA solution). The RPA solution may be recirculated in reference 1 and or in reference 4 and/or in phosphoric acid (PA). Preferably the RPA is recicirculated in step d (reference 4). The portion of the RPA solution which is recirculated in step d) is preferably comprised between 1 and 100 wt.%, more preferably between 5 and 90 wt.%, more preferably between 10 and 80 wt.%, most preferably between 15 and 50 wt. %.

According to an additional embodiment, the process for purifying a phosphorus-containing source, comprises the following steps:
a) At a temperature of lower than 90°C for a duration lower than 60 minutes, reacting HCl solution having a concentration comprised between 5 and 30% with a phosphorus-containing source which comprises metallic trace elements and at least 5 wt.% and at most 40 wt.% of phosphorus expressed as P₂O₅ equivalent leading to a digested suspension comprising said metallic trace elements in a liquid phase, and a solid phase mainly comprising phosphorus-containing compounds, wherein the molar ratio H⁺/P₂O₅ is comprised between 0.05 and 5,
b) Separating said liquid phase from said solid phase mainly comprising phosphorus-containing compounds,
   i. Optionally washing the solid phase to recover impurities in the wash filtrate,
   ii. Optionnally, in the embodiment wherein the solid phase is washed with water (under counter- or co-current washing), before being stored or used, the entire wash filtrate quantity or a portion of the wash filtrate of the solid phase can be recirculated into the reaction step (a) or as a component of the digested suspension or as a vehiculing agent for the phosphorus-containing source or any combinations or mixture thereof. The portion of the wash filtrate which is recirculated is preferably comprised between 1 and 100 wt.%, more preferably between 5 and 90 wt.%, more preferably between 10 and 80 wt.%, most preferably between 15 and 50 wt. %,
   iii. Optionally recycling the liquid phase or the wash filtrate in the reaction step (a),
   iv. Optionnally, adding a basic compound, preferably a calcium compound, to said digested suspension,
   v. Optionnally, adding a basic compound, to said liquid phase to precipitate impurities.

According to an additional embodiment, the process for purifying a phosphorus-containing source, comprises the following steps:
a) At a temperature lower than 90°C for a duration lower than 60 minutes, reacting H₂SO₄ solution having a concentration comprised between 5 and 20% with a phosphorus-containing source which comprises metallic trace elements and at least 5 wt.% and at most 40 wt.% of phosphorus expressed as P₂O₅ equivalent leading to a digested suspension comprising said metallic trace elements in a liquid phase, and a solid phase mainly comprising phosphorus-containing compounds, wherein the molar ratio H⁺/P₂O₅ is comprised between 0.05 and 5,
b) Separating said liquid phase from said solid phase mainly comprising phosphorus-containing compounds,
   i. Optionally washing the solid phase to recover impurities in the wash filtrate,
   ii. Optionnally, in the embodiment wherein the solid phase is washed with water (under counter- or co-current washing), before being stored or used, the entire wash filtrate quantity or a portion of the wash filtrate of the solid phase can be recirculated into the reaction step (a) or as a component of the digested suspension or as a vehiculing agent for the phosphorus-containing source or any combinations or mixture thereof. The portion of the wash filtrate which is recirculated is preferably comprised between 0 and 100 wt.%, more preferably between 5 and 90 wt.%, more preferably between 10 and 80 wt.%, most preferably between 15 and 50 wt. %,
   iii. Optionally recycling the liquid phase or the wash filtrate in the reaction step (a),
   iv. Optionnally, adding a basic compound, preferably a calcium compound, to said digested suspension,
   v. Optionnally, adding a basic compound, to said liquid phase to precipitate impurities.

The present invention applies to any raw material (phosphorus containing source), including raw materials comprising substantial amounts of impurities. In a raw material comprising substantial amounts of impurities, it is advantageous that as much impurities are dissolved with the acidic leaching liquor, and as low P₂O₅ as possible is dissolved and remains in the solid phase, separated from the digested suspension after the separation step (b).

Any separation step referred in the present invention may be done with a filter or a sedimentation step, preferably the filtration step will be under pression or under vacuum. The separation is advantageously done with separation apparatus known in the art : band filter, tilting pan filter, centrifugal filter, ...

The present invention is also directed to produce a purified solid phase mainly comprising phosphorus-containing compounds, thanks to the process of the present invention and which may be used in phosphoric acid production to produce Merchant Grade acid or food grade acid and salts or feed grade acid and salts.

The present invention is also directed to produce a purified phosphoric acid and/or monocalcium phosphate in solution to be used directly in Fertilisers, Food, Feed, Pharmaceutical, electronical, horticultural applications or to producephosphoric acid salts to be used in Fertilisers, Food, Feed, Pharmaceutical, electronical, horticultural applications.

The pH measurement : pH is measured directly in the digested suspension at the temperature of reaction with a Metler Toledo (Pt1000) pH meter (calibration is done before each measurement with calibrated solutions).

Within the context of the present invention P₂O₅ wt.% may be measured by any suitable method known in the art. Preferably P₂O₅ wt.% can be measured by colorimetry of phospho-vanado-molybdate at 436 nm (yellow) (Light absorption spectrophotometry).

Whitin the context of the present invention, As, Cd, U₃O₈, Ni, and Ti can each or any combinations thereof be measured after sample preparation by Inductively Coupled Plasma ( ICP) spectrometry, more particularly by Inductively Coupled Plasma -Optical Emission spectrometry ( ICP-OES).

### EXAMPLES 1-3

A phosphate rock (= Rock 1) (analyses given below) is attacked with sulfuric acid (98%) at 75 °C during 60 minutes.

| ppm / wt.% P₂O₅ | As | Cd | Sr | U₃O₈ | V | Cu | Zn |
|---|---|---|---|---|---|---|---|
| Rock1 | ~ 0.5 | ~0.88 | 33.4 | ~5 | 4.6 | 0.9 | 8.4 |

**Table 1 Examples 1 to 3**

| **Tests conditions** | **1** | **2** | **3** |
|---|---|---|---|
| H⁺/Ca | 0.318 | 0.370 | 0.518 |
| H⁺/P₂O₅ | 1.322 | 1.537 | 2.152 |
| pH | 2.87 | 2.61 | 2.17 |
| Concentration sulphuric acid | 5.7% | 6.5% | 8.9% |

| **Tests results** | **1** | **2** | **3** |
|---|---|---|---|
| Yield P₂O₅ | >85% | >85% | >80% |
| Cd removal | 12.8% | 20.1% | 37.4% |
| As removal | 21% | 24.9% | 32% |
| Sr removal | 2.50% | 4.4% | 7% |
| U removal | 6.11% | 15.3% | 35% |
| Zn removal | NA | NA | 48% |
| Cu removal | NA | NA | 46% |
| V removal | NA | NA | 17% |

### EXAMPLES CEx4 and Ex5

A phosphate rock (= Rock 2) (analyses given below) different from the one used in Examples 1 to 3 supra, and comprising 24.7 wt.% P₂O₅ is attacked with a mineral acid (98%) at 75 °C during 60 minutes.

| ppm / wt.% P₂O₅ | As | Cd | Sr | U₃O₈ | V | Cu | Zn |
|---|---|---|---|---|---|---|---|
| Rock2 | 68.2 | 2.13 | 0.117 | 6 | LDL | 6 | 88 |

**Table 2: Examples CEx4 and Ex5**

| **Tests conditions** | **CEX4** | **EX5 (INV)** |
|---|---|---|
| H⁺/Ca | 0.41 | 0.51 |
| H⁺/P₂O₅ | 1.96 | 1.56 |
| pH0 | < 1 | < 1 |
| Concentration MA | 8.7% | 10.7% |
| pH1 | NA | 4 |
| ΔpH= pH1 - pH0 | NA | 3-4 |

| **Tests results** | **CEX4** | **EX5 (INV)** |
|---|---|---|
| Yield P₂O₅ (solid) | 77.8% | 100% |
| Cd removal (liquid) | 78% | 73% |

CEX4 and EX5 can be used to quantify the graph of Figure 2 with Me = Cd. Referring to Table 2 supra, the leaching step (a) was carried out at pH0 <1. As results from Example 4, the rock leached at , yielded a leached suspension comprising (1 - Me_0) = 78% of the Me initially present in the Rock 2 which dissolved in the liquid phase. The proportion of P₂O₅ initially present in the Rock 2 which dissolved during leaching, together with Me, was (1 - P₂O₅_0) = 22.2%. This fraction of P₂O₅ would be lost if not further treated before or after the separation step to recover the dissolved P₂O₅.

In Example 5, prior to the separation step, the pH of the leached suspension of Example 4 was increased by addition of a base from pH0 < 1 to pH1 = 4, (i.e., an increase of ΔpH = 3 to 4 units). At pH1 = 4, substantially all of the dissolved P₂O₅ present in the liquid phase (within the tolerances of analyses) precipitated, thus increasing the P₂O₅-yield from P₂O₅_0 = 77.8% to P₂O₅ 1 = 100%. At the same time, only a small fraction of the dissolved Me precipitated upon raising the pH to pH1, thus increasing the proportion of Me initially present in the Rock 2 which is present in the solid phase from Me_0 = 22% at pH0 = 0 to Me_1 = 27% at pH1 = 4.

The present invention therefore clearly increases the P₂O₅ yield while maintaining substantially stable metal impurity, Me, removal rate.

## Claims

1. A process for purifying a phosphorus-containing source, comprising removing metallic trace elements including Cd from the phosphorus-containing source, the process comprising the following steps:
a) At a temperature lower than 100°C for a duration lower than 180 minutes, reacting at least one phosphorus-containing source which comprises metallic trace elements and at least 5 wt.% and at most 50 wt.% of phosphorus expressed as P₂O₅ equivalent with at least one mineral acid leading to a digested suspension comprising said metallic trace elements in a liquid phase, and a solid phase mainly comprising phosphorus-containing compounds, wherein the reaction is performed at a molar ratio H⁺/P₂O₅ comprised between 0.05 and 5,
b) Separating said liquid phase from said digested suspension
**Characterised in that,** the pH is measured in the digested suspension before filtration step (b), and **in that** the measured pH is adjusted by adding at least one basic compound (step f) in the digested suspension by an increase of said measured pH equal to a value comprised between 0.25 and 4 units.

2. Process according to claim 1, wherein said at least one mineral acid is chosen from the group comprising sulfuric acid, phosphoric acid, chlorhydric acid, nitric acid, hydrofluoric acid, hexafluorosilicic acid and / or said at least one mineral acid is a recycled acidic residual aqueous solution obtained during phosphate production such as an acidic residual solution (such as preferably a Recycled Phosphoric Acid, "RPA") and / or during washing of an installation or during washing of gases of a plant and any combinations thereof.

3. Process according to claim 1 or 2, wherein said digested suspension or phosphorus-containing source has a solid concentration higher than 10 wt.%, preferably higher than 15 wt.%, preferably higher than 20 wt.%, preferably higher than 25 wt.%, more preferably higher than 27 wt.%, even more preferably higher than 30 wt.%.

4. Process according to any one of the preceding claims, wherein said at least one mineral acid has a concentration comprised between 3 wt.% and 99 wt.%, preferably between 4 and 95 wt.%, preferably between 5 and 90 wt.%, more preferably between 6 and 85 wt.%, more preferably between 7 and 50 wt.%, most preferably between 8 and 25 wt.% or is equal to 7 wt. % + 2 wt.%.

5. Process according to any one of the preceding claims, wherein the reaction step (a) occurs at a temperature lower than 90°C, preferably lower than 80°C, more preferably between 25°C and 75°C, more preferably between 30°C and 72°C, even more preferably between 60°C and 71°C, advantageously equal to 65 °C.

6. Process according to any one of the preceding claims, wherein the reaction step (a) has a duration lower than 90 min, preferably lower than 60 min, more preferably lower than 50 min, even more preferably lower than 45 min, advantageously lower than 40 min, and preferably at least 5 minutes, more preferably at least 10 minutes.

7. Process according to any one of the preceding claims, wherein the phosphorus-containing source contains calcium (Ca) and wherein said at least one mineral acid is reacted with said phosphorus-containing source at a sub-stoichiometric molar ratio (H⁺/Ca).

8. Process according to any one of the preceding claims, wherein the reaction step (a) is performed until reaching a pH comprised between 1.0 and 6.0, more preferably between 1.5 and 5.5, even more preferably between 1.7 and 5.0, even more preferably between 2.0 and 4.5.

9. Process according to any one of the preceding claims, wherein the increase of said measured pH equals to a value of 0.25 or 0.5 or 0.75 or 1 or 1.5 or 2 or 2.5 or 3.0 or 3.5 or 4 unit(s).

10. Process according to any one of the preceding claims, wherein beside Cd, said metallic trace elements are chosen from As, Ba, Fe, Hg, Mo, Pb,Zn, Sr, Sb, Cr, Co, Cu, Sn, Mn, Ni, Se, Te, TI, V, U, Ra, Th and Zn and combinations thereof.

11. Process according to any one of the preceding claims, wherein the Cd content in the solid phase mainly comprising phosphorus-containing compounds is reduced by at least 10% in comparison with the Cd content in the phosphorus-containing source, preferably reduced by at least 15%, more preferably reduced by at least 20%, even more preferably reduced by at least 25%, preferably reduced by at least 30%.

12. Use of the process according to any one of the preceding claims in the production of:
- A fertilizer, preferably of the type of monoammonium or diammonium phosphates (MAP or DAP), NPK fertilizer (Ammonium-Potassium Phosphate fertilizer), NPS fertilizer (Ammonium-sulfate Phosphate fertilizer) MCP monocalcium phosphate, DCP dicalcium phosphate SSP (single super phosphate), TSP (triple superphosphate), and / or
- Animal food, and / or
- Merchant grade or purified phosphoric acid, and / or
- Purified Phosphate salts.

## Patentansprüche

1. Verfahren zur Reinigung einer phosphorhaltigen Quelle, umfassend Entfernen metallischer Spurenelemente einschließlich Cd aus der phosphorhaltigen Quelle, wobei das Verfahren die folgenden Schritte umfasst:
a) bei einer Temperatur von weniger als 100 °C für eine Dauer von weniger als 180 Minuten Umsetzen wenigstens einer phosphorhaltigen Quelle, die metallische Spurenelemente und wenigstens 5 Gew.-% und höchstens 50 Gew.-% Phosphor, ausgedrückt als P₂O₅-Äquivalent, umfasst, mit wenigstens einer Mineralsäure, um eine aufgeschlossene Suspension, die die metallischen Spurenelemente in einer flüssigen Phase umfasst, und eine feste Phase, die hauptsächlich phosphorhaltige Verbindungen umfasst, zu erhalten, wobei die Reaktion bei einem Molverhältnis H⁺/P₂O₅ in dem Bereich zwischen 0,05 und 5 durchgeführt wird,
b) Abtrennen der flüssigen Phase von der aufgeschlossenen Suspension
**dadurch gekennzeichnet, dass** der pH-Wert in der aufgeschlossenen Suspension vor dem Filtrationsschritt (b) gemessen wird und dass der gemessene pH-Wert in der aufgeschlossenen Suspension durch Zugeben wenigstens einer basischen Verbindung (Schritt f) mit einer Erhöhung des gemessenen pH-Werts auf einen Wert zwischen 0,25 und 4 Einheiten eingestellt wird.

2. Verfahren nach Anspruch 1, wobei die wenigstens eine Mineralsäure ausgewählt ist aus der Gruppe umfassend Schwefelsäure, Phosphorsäure, Chlorwasserstoffsäure, Salpetersäure, Fluorwasserstoffsäure, Hexafluorkieselsäure, und/oder die wenigstens eine Mineralsäure eine recycelte saure wässrige Restlösung ist, die bei der Phosphatproduktion erhalten wird, wie z.B. eine saure Restlösung (wie z.B. vorzugsweise eine recycelte Phosphorsäure, "RPA") und/oder während des Waschens einer Anlage oder während des Waschens von Gasen einer Anlage und beliebigen Kombinationen davon.

3. Verfahren nach Anspruch 1 oder 2, wobei die aufgeschlossene Suspension oder phosphorhaltige Quelle eine Feststoffkonzentration von höher als 10 Gew.-%, vorzugsweise höher als 15 Gew.-%, vorzugsweise höher als 20 Gew.-%, vorzugsweise höher als 25 Gew.-%, bevorzugter höher als 27 Gew.-%, noch bevorzugter höher als 30 Gew.-% aufweist.

4. Verfahren nach einem der vorstehenden Ansprüche, wobei die wenigstens eine Mineralsäure eine Konzentration in dem Bereich zwischen 3 Gew.-% und 99 Gew.-%, vorzugsweise zwischen 4 und 95 Gew.-%, vorzugsweise zwischen 5 und 90 Gew.-%, bevorzugter zwischen 6 und 85 Gew.-%, bevorzugter zwischen 7 und 50 Gew.-%, höchst bevorzugt zwischen 8 und 25 Gew.-% aufweist oder gleich 7 Gew.-% ± 2 Gew.-% ist.

5. Verfahren nach einem der vorstehenden Ansprüche, wobei der Reaktionsschritt (a) bei einer Temperatur von weniger als 90 °C, vorzugsweise weniger als 80 °C, bevorzugter zwischen 25 °C und 75 °C, bevorzugter zwischen 30 °C und 72 °C, noch bevorzugter zwischen 60 °C und 71 °C, vorteilhaft gleich 65 °C, erfolgt.

6. Verfahren nach einem der vorstehenden Ansprüche, wobei der Reaktionsschritt (a) eine Dauer von weniger als 90 min, vorzugsweise weniger als 60 min, bevorzugter weniger als 50 min, noch bevorzugter weniger als 45 min, vorteilhaft weniger als 40 min und vorzugsweise wenigstens 5 min, bevorzugter wenigstens 10 min, aufweist.

7. Verfahren nach einem der vorstehenden Ansprüche, wobei die phosphorhaltige Quelle Calcium (Ca) enthält und wobei die wenigstens eine Mineralsäure mit der phosphorhaltigen Quelle in einem unterstöchiometrischen Molverhältnis (H⁺/Ca) umgesetzt wird.

8. Verfahren nach einem der vorstehenden Ansprüche, wobei der Reaktionsschritt (a) bis zum Erreichen eines pH-Werts zwischen 1,0 und 6,0, bevorzugter zwischen 1,5 und 5,5, noch bevorzugter zwischen 1,7 und 5,0, sogar noch bevorzugter zwischen 2,0 und 4,5, durchgeführt wird.

9. Verfahren nach einem der vorstehenden Ansprüche, wobei die Zunahme des gemessenen pH-Werts gleich einem Wert von 0,25 oder 0,5 oder 0,75 oder 1 oder 1,5 oder 2 oder 2,5 oder 3,0 oder 3,5 oder 4 Einheiten ist.

10. Verfahren nach einem der vorstehenden Ansprüche, wobei neben Cd die metallischen Spurenelemente ausgewählt sind aus As, Ba, Fe, Hg, Mo, Pb, Zn, Sr, Sb, Cr, Co, Cu, Sn, Mn, Ni, Se, Te, TI, V, U, Ra, Th und Zn und Kombinationen davon.

11. Verfahren nach einem der vorstehenden Ansprüche, wobei der Cd-Gehalt in der festen Phase, die hauptsächlich phosphorhaltige Verbindungen enthält, um wenigstens 10 % im Vergleich zu dem Cd-Gehalt in der phosphorhaltigen Quelle verringert wird, vorzugsweise um wenigstens 15 % verringert wird, bevorzugter um wenigstens 20 % verringert wird, noch bevorzugter um wenigstens 25 % verringert wird, vorzugsweise um wenigstens 30 % verringert wird.

12. Verwendung des Verfahrens nach einem der vorstehenden Ansprüche bei der Herstellung von:
- einem Düngemittel, vorzugsweise vom Typ von Monoammonium- oder Diammoniumphosphaten (MAP oder DAP), NPK-Düngemittel (Ammonium-Kaliumphosphat-Düngemittel), NPS-Düngemittel (Ammoniumsulfat-Phosphat-Düngemittel) MCP-Monocalciumphosphat, DCP-Dicalciumphosphat SSP (Single Superphosphat), TSP (Triple Superphosphat) und/oder
- Tiernahrung und/oder
- Phosphorsäure von Handelsqualität oder gereinigter Phosphorsäure und/oder
- gereinigten Phosphatsalzen.

## Revendications

1. Procédé de purification d'une source contenant du phosphore comprenant l'élimination d'oligo-éléments métalliques dont du Cd de la source contenant du phosphore, le procédé comprenant les étapes suivantes :
a) à une température inférieure à 100 °C pendant une durée inférieure à 180 minutes, mise en réaction d'au moins une source contenant du phosphore qui comprend des oligo-éléments métalliques et au moins 5 % poids et au plus 50 % poids de phosphore exprimé en équivalent P₂O₅ avec au moins un acide minéral conduisant à une suspension digérée comprenant lesdits oligo-éléments métalliques dans une phase liquide, et une phase solide comprenant principalement des composés contenant du phosphore, dans laquelle la réaction est effectuée à un rapport molaire H⁺/P₂O₅ compris entre 0,05 et 5,
b) séparation de ladite phase liquide de ladite suspension digérée
**caractérisé en ce que** le pH est mesuré dans la suspension digérée avant l'étape (b) de filtration, et **en ce que** le pH mesuré est ajusté par ajout d'au moins un composé basique (étape f) dans la suspension digérée par une augmentation dudit pH mesuré égale à une valeur comprise entre 0,25 et 4 unités.

2. Procédé selon la revendication 1, dans lequel ledit au moins un acide minéral est choisi dans le groupe comprenant l'acide sulfurique, l'acide phosphorique, l'acide chlorhydrique, l'acide nitrique, l'acide fluorhydrique, l'acide hexafluorosilicique et/ou ledit au moins un acide minéral est une solution aqueuse résiduelle acide recyclée obtenue lors de la production de phosphate telle qu'une solution résiduelle acide (tel que de préférence un acide phosphorique recyclé « RPA ») et / ou lors du lavage d'une installation ou lors du lavage de gaz d'une usine et de quelconques combinaisons correspondantes.

3. Procédé selon la revendication 1 ou 2, dans lequel la suspension digérée ou la source contenant du phosphore a une concentration en solides supérieure à 10 % en poids, de préférence supérieure à 15 % en poids, de préférence supérieure à 20 % en poids, de préférence supérieure à 25 % en poids, plus préférablement supérieure à 27 % en poids, encore plus préférablement supérieure à 30 % en poids.

4. Procédé selon l'une quelconque des revendications précédentes, dans lequel ledit au moins un acide minéral a une concentration comprise entre 3 % en poids et 99 % en poids, de préférence entre 4 et 95 % en poids, de préférence entre 5 et 90 % en poids, plus préférablement entre 6 et 85 % en poids, plus préférablement entre 7 et 50 % en poids, de manière préférée entre toutes entre 8 et 25 % en poids ou est égale à 7 % en poids ± 2 % en poids.

5. Procédé selon l'une quelconque des revendications précédentes, dans lequel l'étape de réaction (a) se déroule à une température inférieure à 90 °C, de préférence inférieure à 80 °C, plus préférablement comprise entre 25 °C et 75 °C, plus préférablement entre 30 °C et 72 °C, encore plus préférablement entre 60 °C et 71 °C, avantageusement égale à 65 °C.

6. Procédé selon l'une quelconque des revendications précédentes, dans lequel l'étape de réaction (a) a une durée inférieure à 90 min, de préférence inférieure à 60 min, plus préférablement inférieure à 50 min, encore plus préférablement inférieure à 45 min, avantageusement inférieure à 40 min, et de préférence d'au moins 5 minutes, plus préférablement au moins 10 minutes.

7. Procédé selon l'une quelconque des revendications précédentes, dans lequel la source contenant du phosphore contient du calcium (Ca) et dans lequel ledit au moins un acide minéral est mis à réagir avec ladite source contenant du phosphore selon un rapport molaire (H⁺/Ca) sous-stœchiométrique.

8. Procédé selon l'une quelconque des revendications précédentes, dans lequel l'étape de réaction (a) est réalisée jusqu'à atteindre un pH compris entre 1,0 et 6,0, plus préférentiellement entre 1,5 et 5,5, encore plus préférablement entre 1,7 et 5,0, encore plus préférablement entre 2,0 et 4,5.

9. Procédé selon l'une quelconque des revendications précédentes, dans lequel l'augmentation dudit pH mesuré est égale à une valeur de 0,25 ou 0,5 ou 0,75 ou 1 ou 1,5 ou 2 ou 2,5 ou 3,0 ou 3,5 ou 4 unité(s).

10. Procédé selon l'une quelconque des revendications précédentes, dans lequel outre Cd, lesdits oligo-éléments métalliques sont choisis parmi As, Ba, Fe, Hg, Mo, Pb, Zn, Sr, Sb, Cr, Co, Cu, Sn, Mn, Ni, Se, Te, TI, V, U, Ra, Th et Zn et leurs combinaisons.

11. Procédé selon l'une quelconque des revendications précédentes, dans lequel la teneur en Cd dans la phase solide comprenant principalement des composés contenant du phosphore est réduite d'au moins 10 % par rapport à la teneur en Cd dans la source contenant du phosphore, de préférence réduite d'au moins 15 %, plus préférablement réduite d'au moins 20 %, encore plus préférablement réduite d'au moins 25 %, de préférence réduite d'au moins 30 %.

12. Utilisation du procédé selon l'une quelconque des revendications précédentes dans la réalisation de :
- un engrais, de préférence de type phosphates de monoammonium ou diammonium (MAP ou DAP), engrais NPK (engrais au phosphate d'ammonium-potassium), engrais NPS (engrais au sulfate phosphate d'ammonium) MCP phosphate monocalcique, DCP phosphate dicalcique SSP (single super phosphate), TSP (triple superphosphate), et / ou
- un produit alimentaire pour animaux, et / ou
- de l'acide phosphorique de qualité commerciale ou purifié, et/ou
- des sels de phosphate purifiés.
